# EUROPÄISCHE PATENTSCHRIFT

(11) **EP 1 876 367 B1**
(45) Veröffentlichungstag und Bekanntmachung des Hinweises auf die Patenterteilung: **14.12.2016**
(21) Anmeldenummer: 07012244.5
(22) Anmeldetag: 22.06.2007
(51) Int. Cl.: F16D 13/38, F16D 25/0638

(54) **Mehrscheibenkupplungssystem, insbesondere für Nuztkraftfahrzeuge**
Multi-disc clutch system, in particular for commercial vehicles
Système d'embrayage multidisques, en particulier pour véhicules utilitaires

(30) Priorität: 08.07.2006 DE 102006031596; 14.06.2007 DE 102007027478
(43) Veröffentlichungstag der Anmeldung: 09.01.2008
(73) Patentinhaber: ZF Friedrichshafen AG, 88046 Friedrichshafen (DE)
(72) Erfinder: Lindner, Joachim, 97456 Dittelbrunn (DE); Weidinger, Reinhold, 97509 Unterspiesheim (DE)

(56) Entgegenhaltungen:
- DE-A1- 4 412 106
- DE-A1- 4 418 026
- US-A1- 2003 062 236
- US-A1- 2003 201 144

## Beschreibung

Die vorliegende Erfindung betrifft ein Mehrscheibenkupplungssystem, wie es vorzugsweise bei Nutzkraftfahrzeugen zum Einsatz gelangen kann.

So genannte Mehrscheibenkupplungen weisen den Vorteil auf, dass auf Grund des Einsatzes mehrerer Kupplungsscheiben bzw. Kupplungsscheibenbereiche zur Drehmomentübertragung zwischen einem Antriebsaggregat und einer Getriebeeingangswelle eine deutlich vergrößerte Reibfläche genutzt werden kann. Diese ermöglicht es, den eine Anpresskraft und somit die erforderliche Einrückkraft erzeugenden Kraftspeicher deutlich schwächer zu dimensionieren, da beispielsweise bei Verdopplung der wirksamen Reibfläche ein vorgegebenes Drehmoment mit halber Einrückkraft übertragen werden kann. Aus diesem Grund eignen sich derartige Mehrscheibenkupplungen besonders auch in Verbindung mit drehmomentenstarken Antriebsaggregaten, wie sie in Nutzkraftfahrzeugen eingesetzt werden.

Aus der US 2003/062236 A1 geht ein Mehrscheibenkupplungssystem mit einer Widerlagerplatte und einer Verschleißkompensationsanordnung hervor.

Die DE 44 18 026 A1 lehrt ein Kupplungssystem mit einem automatisierten Betätigungssystem.

Es ist die Aufgabe der vorliegenden Erfindung, ein Mehrscheibenkupplungssystem, insbesondere für Nutzkraftfahrzeuge, vorzusehen, mit welchem ein verbessertes Betriebsverhalten erlangt werden kann.

Erfindungsgemäß wird diese Aufgabe gelöst durch ein Mehrscheibenkupplungssystem nach Anspruch 1.

Wesentlich ist bei dem erfindungsgemäßen Mehrscheibenkupplungssystem, dass durch den Einsatz einer Verschleißkompensationsanordnung und den Einsatz eines Kraftspeichers, der im Wesentlichen über den gesamten Betätigungsbereich eine konstante Kraft bereitstellt, die Ansteuerung des automatisierten Betätigungssystems bei der Durchführung von Betätigungsvorgängen, also Auskuppelvorgängen bzw. Einkuppelvorgängen, mit deutlich höherer Präzision erfolgen kann. Einerseits sorgt die Verschleißkompensationsanordnung dafür, dass sich über die Betriebslebensdauer hinweg die Einbaulage des Kraftspeichers nahezu nicht verändert, so dass dieser immer im gleichen Kennlinienbereich wirksam sein kann. Andererseits sorgt die Auslegung der Kennlinie derart, dass sie im Wirkungsbereich des Kraftspeichers näherungsweise konstant ist, dafür, dass das Betätigungssystem immer gegen eine nahezu gleich bleibende Gegenkraft arbeitet, was deutlich präziser durchführbare Stellvorgänge mit sich bringt. Dabei ist die Variation der Anpresskraft des Kraftspeichers im Betätigungshubbereich der Anpressplatte kleiner als 10%.

Beispielsweise kann vorgesehen sein, dass die Variation der Anpresskraft des Kraftspeichers im Betätigungshubbereich der Anpressplatte kleiner als 5% ist.

Dabei ist hinsichtlich der Präzision der durchzuführenden Stellvorgänge vorgesehen, dass die Anpresskraft des Kraftspeichers im Betätigungshubbereich der Anpressplatte bei Betätigung in Richtung zu einem Auskuppelzustand im Variationsbereich zunimmt.

Wenn die Verschleißkompensationsanordnung zwischen dem Kraftspeicher und der Anpressplatte wirkt, dann ist nicht nur dafür gesorgt, dass der Kraftspeicher über die Betriebslebensdauer hinweg im gleichen Kennlinienbereich arbeitet, sondern dann kann weiterhin die räumliche Einbaulage des Kraftspeichers in der Mehrscheibenkupplung selbst konstant gehalten werden. Dies hat einen besonders vorteilhaften Einfluss auf die Zusammenwirkung des Kraftspeichers mit dem automatisierten Betätigungssystem über die Betriebslebensdauer der Mehrscheibenkupplung hinweg.

Beispielsweise kann vorgesehen sein, dass die Kupplungsscheibenbereiche Reibbeläge aufweisen, die über eine Belagsfederung an einem Reibbelagträger getragen sind. Weiter ist es vorteilhaft, wenn die Kupplungsscheibenbereiche über eine gemeinsame Nabenanordnung mit der Abtriebswelle verbunden oder zu verbinden sind.

Um im Drehmomentübertragungsbetrieb auftretende Drehungleichförmigkeiten mindern zu können, wird weiterhin vorgeschlagen, dass die Kupplungsscheibenbereiche eine Torsionsschwingungsdämpferanordnung aufweisen. Da hier also mehrere Kupplungsscheibenbereiche mit den jeweiligen Torsionsschwingungsdämpferanordnungen ausgestaltet sind, verteilt sich die zu übertragende Last auf diese mehreren Torsionsschwingungsdämpferanordnungen, so dass jede davon grundsätzlich so dimensioniert sein kann, dass sie nur vergleichsweise geringe Drehmomente zu übertragen hat, jedoch mit einem größeren Dämpferwinkelbereich ausgestaltet sein kann.

Die vorliegende Erfindung wird nachfolgend mit Bezug auf die beiliegenden Zeichnungen detailliert beschrieben. Es zeigt:
- Fig. 1: eine Längsschnittansicht einer erfindungsgemäß aufgebauten Mehrscheibenkupplung, geschnitten längs einer Linie I-I in Fig. 3;
- Fig. 2: eine Ansicht der in Fig. 1 dargestellten Mehrscheibenkupplung in Blickrichtung II in Fig. 3;
- Fig. 3: eine Axialansicht der Mehrscheibenkupplung der Fig. 1 in Blickrichtung III in Fig. 1;
- Fig. 4: ein Diagramm, das verschiedene Kraftkennlinien von Kraftspeichern darstellt;
- Fig. 5: ein Diagramm, das die bei Durchführung von Betätigungsvorgängen aufzubringende Betätigungskraft über dem Betätigungsweg darstellt.

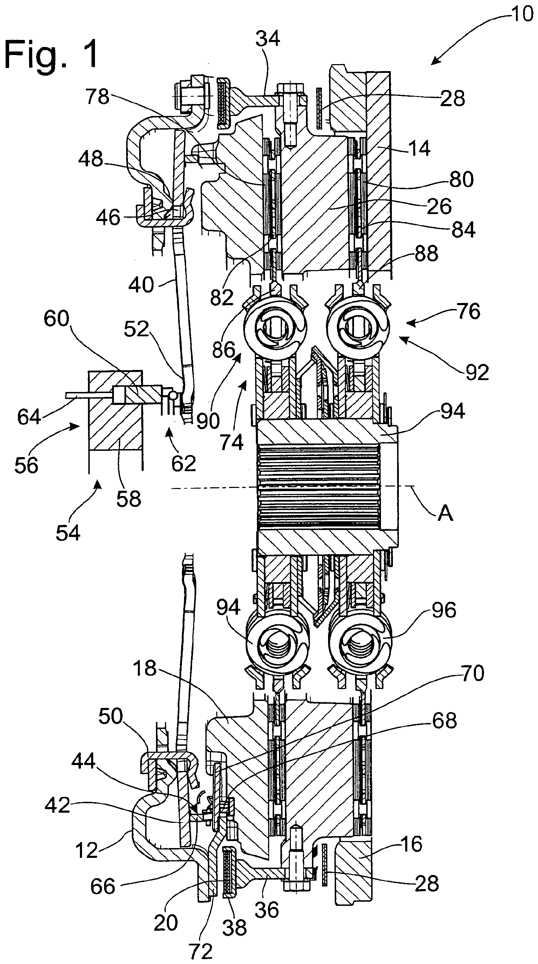

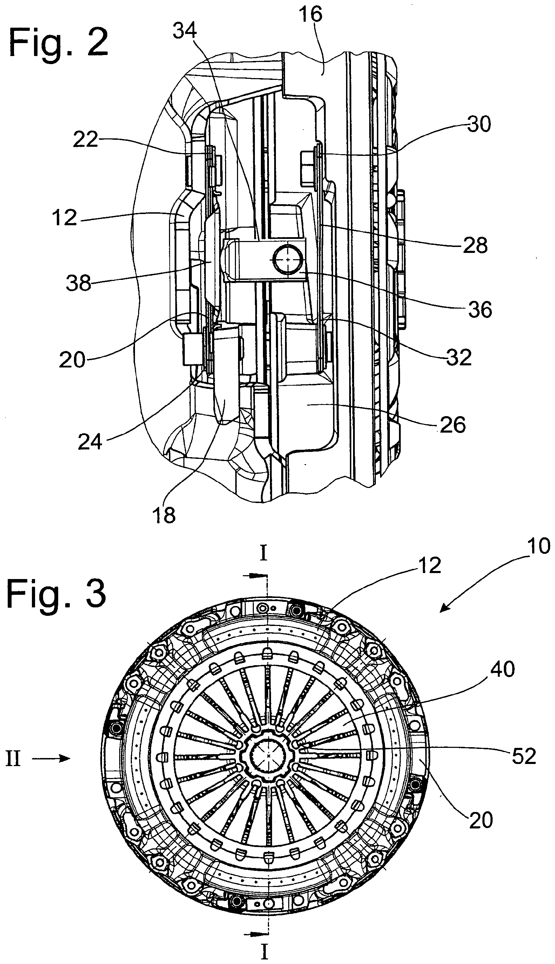

In den Fig. 1 bis 3 ist eine erfindungsgemäße Mehrscheibenkupplung, hier ausgebildet als Zweischeibenkupplung 10 dargestellt. Diese Zweischeibenkupplung 10 umfasst ein im Wesentlichen topfartiges Gehäuse 12, das in seinem radial äußeren Bereich an mehreren Umfangspositionen in an sich bekannter Weise an einer beispielsweise als Schwungrad oder Zweimassenschwungrad ausgestalteten Widerlagerplatte 14 festgelegt ist. Diese Festlegung kann über ein in den Fig. 1 und 2 auch erkennbares Ringelement 16 erfolgen, dessen Funktion nachfolgend noch beschrieben wird.

Die Zweischeibenkupplung 10 umfasst ferner eine Anpressplatte 18, die innerhalb des Gehäuses 12 angeordnet und über eine erste Gruppe von beispielsweise als Tangentialblattfedern ausgebildeten Kopplungselementen 20 mit dem Gehäuse 12 verbunden ist.

Diese Kopplungselemente 20 bzw. Tangentialblattfedern ermöglichen eine Bewegung der Anpressplatte 18 in Richtung einer Rotationsachse A bei gleichwohl erhaltener im Wesentlichen drehfester Ankopplung an das Gehäuse 12. Man erkennt in Fig. 2, dass diese Kopplungselemente 20 in ihrem ersten Umfangsendbereich 22 durch Nietbolzen oder dergleichen am Gehäuse 12 festgelegt sind und in ihrem zweiten Endbereich 24 durch Nietbolzen oder dergleichen an nach radial außen greifenden Abschnitten der Anpressplatte 18 festgelegt sind.

Zwischen der Anpressplatte 18 und der Widerlagerplatte 14 ist eine Zwischenplatte 26 vorgesehen. Diese Zwischenplatte 26 ist über einen zweiten Satz von beispielsweise ebenfalls als Tangentialblattfedern ausgebildeten Kopplungselementen 28 mit dem vorangehend bereits erwähnten Ring 16 gekoppelt. Man erkennt auch hierzu in Fig. 2, dass in einem ersten Endbereich 30 diese Kopplungselemente bzw. Tangentialblattfedern 28 durch Schraub- oder Nietverbindung am Ring 16 festgelegt sind und in einem zweiten Endbereich 32 durch Schraub- oder Nietverbindung an nach radial außen greifenden Abschnitten der Zwischenplatte 26 festgelegt sind. Die Kopplungselemente 28 sind unter Vorspannung eingebaut und beaufschlagen die Zwischenplatte 26 in Richtung vom Ring 16 und somit auch in Richtung von der Widerlagerplatte 14 weg. Auch die Kopplungselemente 20 sind unter Vorspannung eingebaut und beaufschlagen die Anpressplatte 18 in der gleichen Richtung, also auch in Richtung von der Widerlagerplatte 14 weg.

An denjenigen Umfangspositionen der Zwischenplatte 26, an welchen die zwischen der Anpressplatte 18 und dem Gehäuse 12 wirksamen Kopplungselemente 20 der ersten Gruppe von Kopplungselementen wirksam sind bzw. vorgesehen sind, sind an der Zwischenplatte 26 Abstandsfühler 34 vorgesehen. Diese weisen einen durch Schraubverbindung oder dergleichen am Außenumfang der Zwischenplatte 26 festgelegten Befestigungsabschnitt 36 auf, der einen im Querschnitt U-förmigen Abtastabschnitt 38 trägt. Dieser Abtastabschnitt liegt näherungsweise mittig zwischen den Enden 22, 24 an den Kopplungselementen 20 an, so dass über diese Abstandsfühler 34 die Zwischenplatte 26 in definierter Position bezüglich der Anpressplatte 18 gehalten ist, und zwar unterstützt durch die durch die Kopplungselemente 28 der zweiten Gruppe von Kopplungselementen erzeugte Kraftbeaufschlagung.

Im Gehäuse 12 ist zwischen diesem und der Anpressplatte 18 ein beispielsweise als Membranfeder ausgebildeter Kraftspeicher 40 vorgesehen. Dieser beaufschlagt in einem radial äußeren Bereich 42 über eine Verschleißkompensationsanordnung 44 die Anpressplatte 18 und ist in einem radial weiter innen gelegenen Bereich 46 am Gehäuse 12 abgestützt. Hierzu kann das Gehäuse 12 einen schneidenartigen Ausformungsbereich 48 aufweisen, gegen welchen durch ein oder mehrere Sicherungselemente 50 der radial mittlere Bereich 46 des Kraftspeichers 40 gehalten ist. Am radial inneren Endbereich 52 des Kraftspeichers 40 wird dieser von einem allgemein mit 54 bezeichneten automatisierten Betätigungssystem zur Durchführung von Betätigungsvorgängen beaufschlagt.

Dieses Betätigungssystem 54 kann, wie in Fig. 1 angedeutet, beispielsweise eine Kolben/Zylinder-Baugruppe 56 mit einem Ringzylinder 58 und einem darin eingesetzten Ringkolben 60 aufweisen. Dieser beaufschlagt über ein Drehentkopplungslager 62 den radial inneren Bereich des Kraftspeichers 52. Durch Einleitung eines Druckfluids über eine Fluidleitung 64 kann der Ringkolben 60 in axialer Richtung verschoben werden, so dass er bei Bewegung nach rechts in Fig. 1 gegen den radial inneren Endbereich des Kraftspeichers 40, also beispielsweise die Membranfederzungen drückt und dabei durch Abstützung bzw. Halterung bezüglich des Gehäuses 12 radial außen in Richtung von der Widerlagerplatte 14 wegverschwenkt. Durch die Vorspannwirkung der Kopplungselemente 20 folgt die Anpressplatte dieser Bewegung und bewegt sich ebenfalls in Richtung von der Widerlagerplatte 14 weg. Da die Zwischenplatte 26 über die Abstandsfühler 34 an den Kopplungselementen 20 abgestützt ist, und zwar näherungsweise im Umfangsmittenbereich derselben, wird sich auch die Zwischenplatte 26 in axialer Richtung von der Widerlagerplatte 14 wegbewegen, und zwar in einem Ausmaß, dass näherungsweise der Hälfte des Bewegungshubs der Anpressplatte 18 entspricht. Hier kann durch Einstellung desjenigen Bereichs, welchen die Abstandsfühler 34 an den Kopplungselementen 20 abtasten, das Verhältnis der Bewegung der Zwischenplatte 26 zur Bewegung der Anpressplatte 18 eingestellt werden. Vorzugsweise wird so vorgegangen, dass, wie bereits vorangehend dargelegt, der Hub der Zwischenplatte 26 näherungsweise der Hälfte des Hubs der Anpressplatte 18 entspricht.

Der Aufbau der Verschleißkompensationsanordnung 44 kann herkömmlicher Art sein, so dass hierauf nicht weiter detailliert eingegangen wird. Dieser kann beispielsweise ein ringartiges Nachstellelement 66 umfassen, über welches der Kraftspeicher 40 die Anpressplatte 18 beaufschlagt und das mit Rampenflächenbereichen an entsprechenden Rampenflächen der Anpressplatte 18 aufliegt. Eine Umfangsverdrehung des Nachstellelements 66, erzwungen durch eine Vorspannfeder, führt zu einer axialen Verlagerung desjenigen Oberflächenbereichs des Nachstellelements 66, der durch den Kraftspeicher 40 beaufschlagt wird, in Richtung von der Anpressplatte 18 weg, so dass ein eine Abnahme der Dicke von nachfolgend noch erläuterten Reibbelägen kompensiert werden kann. Das Nachstellelement 66 ist durch einen keilartigen Arretierschieber 68 grundsätzlich an einer Drehbewegung bezüglich der Anpressplatte 18 gehindert, wobei der Arretierschieber 68 wiederum durch ein Federelement 70 belastet und somit gegen ungewollte Bewegung gesichert ist. Ein gehäusefester Anschlag 72 führt bei Auftreten von Verschleiß, also übermäßiger Bewegung der Anpressplatte 18 in Richtung auf die Widerlagerplatte 14 zu, dazu, dass der keilartig ausgebildete Arretierschieber 68 sich in einem dem Verschleiß entsprechenden Ausmaß in Umfangsrichtung bewegen kann und in entsprechendem Ausmaß dann auch den Nachstellring 66 zur Bewegung in Umfangsrichtung freigibt, wenn bei Durchführung eines Auskuppelvorgangs die Beaufschlagungswirkung des Kraftspeichers 40 gemindert ist.

Die Mehrscheibenkupplung 10 umfasst ferner zwei Kupplungsscheibenbereiche 74, 76 mit Reibbelägen 78, 80, wobei die Reibbeläge 78 des Kupplungsscheibenbereichs 74 zwischen der Anpressplatte 18 und der Zwischenplatte 26 klemmbar sind. Die Reibbeläge 80 des Kupplungsscheibenbereichs 74 sind zwischen der Zwischenplatte 26 und der Widerlagerplatte 14 klemmbar. Die Reibbeläge 78 bzw. 80 der Kupplungsscheibenbereiche 74, 76 sind über Belagsfederungen 82 bzw. 84 an Reibbelagträgern 86, 88 getragen, wobei diese Reibbelagsträger 86, 88 beispielsweise den Eingangsbereich von jeweiligen Torsionsschwingungsdämpferanordnungen 90, 92 bilden können. Über diese Torsionsschwingungsdämpferanordnungen 90, 92 sind die beiden Kupplungsscheibenbereiche 74, 76 an einem gemeinsamen Nabenbereich 94 getragen, über welchen die Mehrscheibenkupplung 10 dann an ein Abtriebsorgan, beispielsweise eine Getriebeeingangswelle, drehfest angekoppelt werden kann. Die Kopplung der beiden Kupplungsscheibenbereiche 74, 76 bezüglich des gemeinsamen Nabenbereichs 94 ist dabei so gestaltet, dass die beiden Kupplungsscheibenbereiche 74, 76 sich axial bezüglich einander bewegen können, so dass bei Durchführung von Auskuppelvorgängen und der vorangehend beschriebenen Bewegung der Zwischenplatte 26 und der Anpressplatte 18 in Richtung von der Widerlagerplatte 14 weg tatsächlich auch der Reibkontakt zwischen den Reibbelägen 78, 80 und der Anpressplatte 18, der Zwischenplatte 26 und der Widerlagerplatte 14 aufgehoben werden kann.

Durch den Einsatz der beiden Torsionsschwingungsdämpferanordnungen 90, 92, von welchen jeder, ebenso wie die Reibbeläge 78, 80, nur einen beispielsweise hälftigen Anteil des gesamt zu übertragenden Drehmoments zu übertragen hat, können im Drehmomentübertragungsbetrieb auftretende Drehmomentschwankungen gedämpft werden. Da im Vergleich zu einer herkömmlichen Einscheibenkupplung die Torsionsschwingungsdämpferanordnungen 90, 92 nur geringere Drehmomente zu übertragen haben, können sie also mit entsprechender Rückstellkraft der Dämpferfederbaugruppen 94, 96 bei gleichzeitig vergrößertem Dämpfungswinkel bereitgestellt werden.

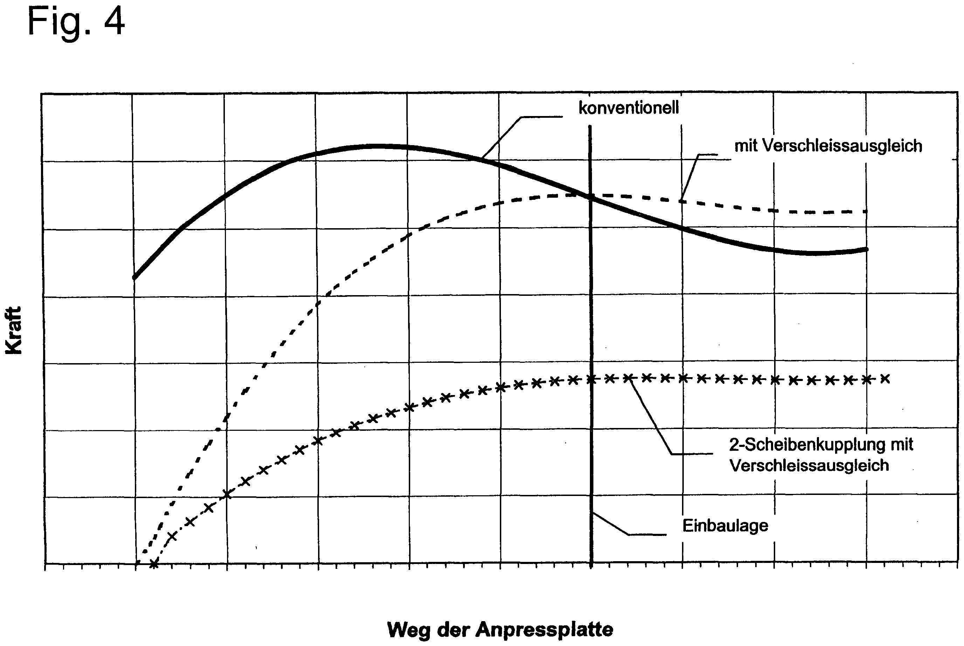

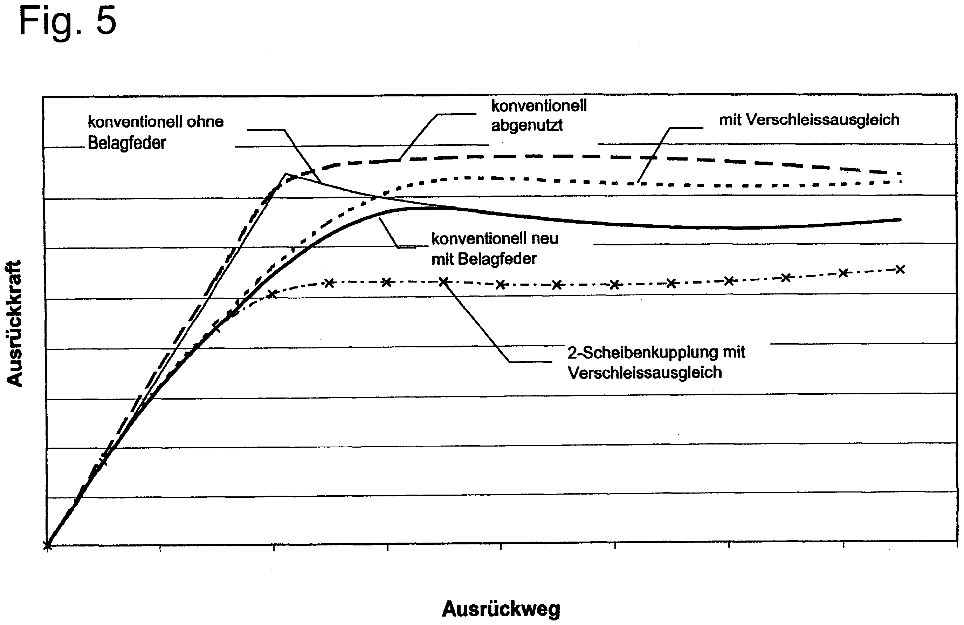

Nachfolgend wird mit Bezug auf die Fig. 4 und 5 die Kraftcharakteristik des Kraftspeichers 40 bzw. das Verhalten bei Durchführen von Betätigungsvorgängen erläutert. So erkennt man zunächst in Fig. 4 ein Diagramm, in welchem aufgetragen über dem Betätigungsweg, hier repräsentiert durch den Weg der Anpressplatte 18, die durch den Kraftspeicher 40 bzw. andere Kraftspeicher bei herkömmlichen Kupplungen bereitgestellte Anpresskraft dargestellt ist. So zeigt zunächst die mit durchgezogener Linie dargestellte Kurve "konventionell" die Kraftkennlinie einer Membranfeder, wie sie in herkömmlichen Einscheibenkupplungen eingesetzt wird. Die vertikale Linie "Einbaulage" zeigt die Lage des Kraftspeichers bzw. der Membranfeder im Einkuppelzustand und beispielsweise ohne Verschleiß. Bei Durchführung von Auskuppelvorgängen bewegt sich der Kraftspeicher entlang der zugeordneten Kennlinie in Richtung von der Vertikallinie "Einbaulage" nach rechts weg, was zur Folge hat, dass mit zunehmendem Ausrücken die erforderliche Betätigungskraft abnimmt.

Die mit Strichlinie eingezeichnete Kurve "mit Verschleißausgleich" zeigt einen Fall, in welchem auf Grund des Bereitstellens einer Verschleißkompensationsanordnung der Kraftspeicher so dimensioniert bzw. eingebaut werden kann, dass in der Einbaulage, also auch im eingerückten Zustand, bereits näherungsweise im Bereich des Maximums der Kraftkennlinie gearbeitet wird, die dann auch mit wesentlich flacherem Verlauf bereitgestellt werden kann.

Die mit Kreuzen gezeichnete Linie "2-Scheibenkupplung mit Verschließausgleich" zeigt die Kennlinie des in der Mehrscheibenkupplung 10 der Fig. 1 eingesetzten Kraftspeichers 40. Da auch hier eine Verschleißkompensationsanordnung 44 vorgesehen ist, kann ebenfalls im Bereich des Maximums der Kennlinie gearbeitet werden. Da weiterhin die effektiv wirksame Reibfläche im Vergleich zu einer herkömmlichen Einscheibenkupplung verdoppelt ist, kann die durch den Kraftspeicher 40 erzeugte Einrückkraft nahezu halbiert werden, was eine entsprechend schwächere Dimensionierung des automatisierten Betätigungssystems 54 gestattet. Weiterhin erkennt man, dass in Richtung von der Linie "Einbaulage" weg nach rechts in Fig. 4 die Kennlinie einen näherungsweise linearen und konstanten Verlauf aufweist, also bei Durchführung von Betätigungsvorgängen zwischen der vollkommen eingekuppelten und der vollkommen ausgekuppelten Stellung nahezu keine Variation der Kraft des Kraftspeichers 40 auftritt. Auch dies ist bei der Auslegung des automatisierten Betätigungssystems 54 und bei der Ansteuerung desselben von bedeutendem Vorteil. Es kann somit nämlich über den gesamten Betätigungsweg hinweg gegen eine konstante Kraft gearbeitet werden, was eine deutlich genauere Einregelung einer gewünschten Kupplungsstellung ermöglicht. Hier kann es vorteilhaft sein, wenn die Variation der Anpresskraft des Kraftspeichers 40, beispielsweise bezogen auf die im Einrückzustand vorhandene Anpresskraft, weniger als 10%, vorzugsweise weniger als 5%, beträgt. Weiterhin kann es vorteilhaft sein, den Kraftspeicher so zu gestalten bzw. einzubauen, dass selbst bei geringerer Variation kein Abfall, sondern ein leichter Anstieg der Anpresskraft auftritt.

Das Diagramm der Fig. 5 zeigt nunmehr die bei Durchführung von Ausrückvorgängen erforderliche Ausrückkraft, bei der nicht nur die Dimensionierung des Kraftspeichers von Bedeutung ist, sondern auch dessen Einbau in die Kupplung. So erkennt man, dass bei dem erfindungsgemäßen Aufbau einer Mehrscheibenkupplung, repräsentiert durch die Linie "2-Scheibenkupplung mit Verschleißausgleich", eine deutlich geringere Ausrückkraft erforderlich ist, als bei den vier anderen Kurven, die herkömmliche Systeme mit gezogenen Kupplungen repräsentieren. Diese Kurven zeigen herkömmliche Einscheibenkupplungen, deren Ausrückkraftkennlinie natürlich davon abhängig ist, ob eine Belagfederung der Reibbeläge vorhanden ist oder nicht, bzw. ob ein Verschleißausgleich vorgesehen ist oder durch aufgetretenen und nicht kompensierten Verschleiß eine Änderung der Einbaulage des Kraftspeichers aufgetreten ist. Deutlich erkennbar ist, dass hier nicht die in der Fig. 4 erkennbare hälftige Absenkung vorhanden ist, da, beim Übergang von einer gezogenen zu einer gedrückten Kupplung, wie sie Gegenstand der vorliegenden Erfindung ist, auf Grund der Änderung der Hebelverhältnisse selbst eine Halbierung der durch einen Kraftspeicher erzeugten und zu überwindenden Anpresskraft nicht zu einer Halbierung der Ausrückkraft führt. Da jedoch gedrückte Kupplungen, wie sie Gegenstand der vorliegenden Erfindung sind, eine geringere axiale Baulänge ermöglichen, kann insbesondere auch in Kombination mit dem Einsatz eines automatisierten Betätigungssystems der durch den Übergang zu einem gedrückten System eingeführte Nachteil einer etwas erhöhten Ausrückkraft akzeptiert werden.

Durch die erfindungsgemäß ausgestaltete Mehrscheibenkupplung wird also bei im Vergleich zu herkömmlichen Mehrscheibenkupplungssystemen verkürzter axialer Baulänge insbesondere durch den Einsatz einer Verschleißkompensationsanordnung und eines Kraftspeichers, welcher einen nahezu konstanten Kraftverlauf im Arbeitsbereich aufweist, eine sehr präzise Einstellung eines jeweils gewünschten Stellzustands ermöglicht. Gleichzeitig ist die Kupplung dazu in der Lage, sehr große Drehmomente zu übertragen und auf Grund des Einsatzes der Torsionsschwingungsdämpferanordnungen Drehungleichförmigkeiten abzufedern. Die in den Figuren dargestellte Zweischeibenkupplung weist auch auf Grund der Tatsache, dass durch den Übergang zu einer gedrückten Kupplung axialer Bauraum an sich eingespart werden kann, eine vergleichsweise dicke Zwischenplatte auf, die zwar etwas von dem ansonsten eingesparten axialen Bauvolumen kompensiert, jedoch den elementaren Vorteil der hohen Wärmeaufnahmekapazität mit sich bringt.

## Patentansprüche

1. Mehrscheibenkupplungssystem, insbesondere für Nutzkraftfahrzeuge, umfassend:
eine Mehrscheibenkupplung (10) mit einem mit einer Widerlagerplatte (14) fest verbundenen oder zu verbindenden Gehäuse (12), einer Anpressplatte (18) und wenigstens einer Zwischenplatte (26) in dem Gehäuse (12), einer Mehrzahl von mit einer Abtriebswelle zur Drehung um eine Drehachse (A) verbundenen oder zu verbindenden Kupplungsscheibenbereichen (74, 76) und einem Kraftspeicher (40), welcher bezüglich des Gehäuses (12) abgestützt ist und die Anpressplatte (18) radial außerhalb der Abstützung bezüglich des Gehäuses (12) beaufschlagt, wobei im Kraftabstützweg zwischen dem Gehäuse (12) und der Anpressplatte (18) eine Verschleisskompensationsanordnung (44) vorgesehen ist,
ein automatisiertes Betätigungssystem (54), mit welchem der Kraftspeicher (40) zur Durchführung von Betätigungsvorgängen in seinem radial inneren Bereich (52) beaufschlagbar ist, wobei der Kraftspeicher (40) bei Durchführung von Betätigungsvorgängen im Betätigungshubbereich der Anpressplatte (18) eine näherungsweise lineare und konstante Anpresskraft bereitstellt,
wobei eine Variation der Anpresskraft des Kraftspeichers (40) im Betätigungshubbereich der Anpressplatte (18) kleiner als 10% ist und wobei im Bereich der Variation die Anpresskraft des Kraftspeichers (40) im Betätigungshubbereich der Anpressplatte (18) bei Betätigung in Richtung zu einem Auskuppelzustand zunimmt.

2. Mehrscheibenkupplungssystem nach Anspruch 1, **dadurch gekennzeichnet, dass** die Variation der Anpresskraft des Kraftspeichers (40) im Betätigungshubbereich der Anpressplatte (18) kleiner als 5% ist.

3. Mehrscheibenkupplungssystem nach einem der Ansprüche 1 oder 2,
**dadurch gekennzeichnet, dass** die Verschleißkompensationsanordnung zwischen dem Kraftspeicher (40) und der Anpressplatte (18) wirkt.

4. Mehrscheibenkupplungssystem nach einem der Ansprüche 1 bis 3, **dadurch gekennzeichnet, dass** die Kupplungsscheibenbereiche (74, 76) Reibbeläge (78, 80) aufweisen, die über eine Belagsfederung (82, 84) an einem Reibbelagträger (86, 88) getragen sind.

5. Mehrscheibenkupplungssystem nach einem der Ansprüche 1 bis 4, **dadurch gekennzeichnet, dass** die Kupplungsscheibenbereiche (74, 76) über eine gemeinsame Nabenanordnung (94) mit der Abtriesbwelle verbunden oder zu verbinden sind.

6. Mehrscheibenkupplungssystem nach einem der Ansprüche 1 bis 5, **dadurch gekennzeichnet, dass** die Kupplungsscheibenbereiche (74, 76) eine Torsionsschwingungsdämpferanordnung (90, 92) aufweisen.

## Claims

1. Multiple-plate clutch system, in particular for commercial motor vehicles, comprising:
a multiple-plate clutch (10) with a housing (12) which is connected fixedly or can be connected fixedly to an abutment plate (14), a pressure plate (18) and at least one intermediate plate (26) in the housing (12), a plurality of clutch plate regions (74, 76) which are connected or can be connected to an output shaft for rotation about a rotational axis (A), and a force accumulator (40) which is supported with regard to the housing (12) and loads the pressure plate (18) radially outside the support with regard to the housing (12), a wear compensation arrangement (44) being provided in the force supporting path between the housing (12) and the pressure plate (18),
an automated actuating system (54), by way of which the force accumulator (40) can be loaded in its radially inner region (52) in order to carry out actuating operations, the force accumulator (40) providing an approximately linear and constant pressing force in the actuating stroke range of the pressure plate (18) when actuating operations are being carried out,
a variation of the pressing force of the force accumulator (40) in the actuating stroke range of the pressure plate (18) being less than 10%, and, within the range of the variation, the pressing force of the force accumulator (40) increasing in the actuating stroke range of the pressure plate (18) in the case of an actuation in the direction of a decoupled state.

2. Multiple-plate clutch system according to Claim 1, **characterized in that** the variation of the pressing force of the force accumulator (40) in the actuating stroke range of the pressure plate (18) is less than 5%.

3. Multiple-plate clutch system according to either of Claims 1 and 2, **characterized in that** the wear compensation arrangement acts between the force accumulator (40) and the pressure plate (18).

4. Multiple-plate clutch system according to one of Claims 1 to 3, **characterized in that** the clutch plate regions (74, 76) have friction linings (78, 80) which are supported on a friction lining carrier (86, 88) via a lining suspension system (82, 84).

5. Multiple-plate clutch system according to one of Claims 1 to 4, **characterized in that** the clutch plate regions (74, 76) are connected or can be connected to the output shaft via a common hub arrangement (94).

6. Multiple-plate clutch system according to one of Claims 1 to 5, **characterized in that** the clutch plate regions (74, 76) have a torsional vibration damper arrangement (90, 92).

## Revendications

1. Système d'embrayage multidisques, en particulier pour véhicules utilitaires, comprenant :
un embrayage multidisques (10) avec un boîtier (12) connecté ou devant être connecté fixement à une plaque de butée (14), une plaque de pressage (18) et au moins une plaque intermédiaire (26) dans le boîtier (12), une pluralité de régions de disques d'embrayage (74, 76) connectées ou devant être connectées à un arbre de sortie de manière à tourner autour d'un axe de rotation (A) est un accumulateur de force (40) qui est supporté par rapport au boîtier (12) et qui sollicite la plaque de pressage (18) radialement à l'extérieur du support par rapport au boîtier (12), un dispositif de compensation d'usure (44) étant prévu dans la voie de support de forces entre le boîtier (12) et la plaque de pressage (18),
un système d'actionnement automatisé (54) avec lequel l'accumulateur de force (40) peut être sollicité pour effectuer des opérations d'actionnement dans sa région radialement intérieure (52), l'accumulateur de force (40), lorsqu'il effectue des opérations d'actionnement dans la région de la course d'actionnement de la plaque de pressage (18), fournissant une force de pressage approximativement linéaire et constante, une variation de la force de pressage de l'accumulateur de force (40) dans la région de la course d'actionnement de la plaque de pressage (18) étant inférieure à 10 % et augmentant dans la région de la variation de la force d'application de l'accumulateur de force (40) dans la région de la course d'actionnement de la plaque de pressage (18) lors de l'actionnement dans la direction d'un état de désaccouplement.

2. Système d'embrayage multidisques selon la revendication 1, **caractérisé en ce que** la variation de la force de pressage de l'accumulateur de force (40) dans la région de la course d'actionnement de la plaque de pressage (18) est inférieure à 5 %.

3. Système d'embrayage multidisques selon l'une quelconque des revendications 1 ou 2, **caractérisé en ce que** l'agencement de compensation d'usure agit entre l'accumulateur de force (40) et la plaque de pressage (18).

4. Système d'embrayage multidisques selon l'une quelconque des revendications 1 à 3, **caractérisé en ce que** les régions de disques d'embrayage (74, 76) présentent des garnitures de friction (78, 80) qui sont portées par le biais d'une suspension des garnitures (82, 84) sur un support de garnitures de friction (86, 88).

5. Système d'embrayage multidisques selon l'une quelconque des revendications 1 à 4, **caractérisé en ce que** les régions de disques d'embrayage (74, 76) sont connectées ou doivent être connectées par le biais d'un agencement de moyeu commun (94) à l'arbre de sortie.

6. Système d'embrayage multidisques selon l'une quelconque des revendications 1 à 5, **caractérisé en ce que** les régions de disques d'embrayage (74, 76) présentent un dispositif d'amortissement des oscillations de torsion (90, 92).
